Europäisches Patentamt

**European Patent Office**

**Office européen des brevets**

(19)

(11) Numéro de publication: **0 031 739**
**B1**

(12)

## FASCICULE DE BREVET EUROPEEN

(45) Date de publication du fascicule du brevet: **19.10.83**

(51) Int. Cl.³: **H 02 K 15/06**

(21) Numéro de dépôt: **80401682.2**

(22) Date de dépôt: **25.11.80**

(54) **Outil de presse destiné au formage des têtes de bobines disposées de part et d'autre d'un stator, et têtes de bobines obtenues à l'aide d'un tel outil.**

(30) Priorité: **21.12.79 FR 7931490**

(43) Date de publication de la demande:
**08.07.81 Bulletin 81/27**

(45) Mention de la délivrance du brevet:
**19.10.83 Bulletin 83/42**

(84) Etats contractants désignés:
**DE GB IT**

(56) Documents cités:
**FR - A - 2 146 431**
**FR - A - 2 258 035**
**US - A - 3 593 405**

(73) Titulaire: **SOCIETE DES MOTEURS ELECTRIQUES DE NORMANDIE**
**Le Paulu**
**F-76112 Saint Pierre de Varengeville (FR)**

(72) Inventeur: **Cottentin, Michel**
**Thomson-CSF - SCPI 173, bld Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

Courier Press, Leamington Spa, England.

**Outil de presse destine au formage des tetes de bobines disposees de part et d'autre d'un stator, et tetes de bobines obtenues a l'aide d'un tel outil**

La présente invention se rapporte à la réalisation d'un outil de presse destiné au formage des têtes de bobine qui sont situées de part et d'autre stator de moteur.

Habituellement, cette opération est exécutée à partir d'une machine de formage dans laquelle les différents mouvements ont leurs propres origines et sont indépendants les uns par rapport aux autres.

Ces machines sont conçues avec une très grande variété de mécanismes (systèmes hydrauliques, pneumatiques, etc.). Elles sont complexes et coûteuses, avec des temps de cycle assez lents.

Il existe également des outils ou montages de formage qui s'adaptent sur des presses "Col de Cygne" animées d'un seul mouvement vertical obtenu à partir d'un vérin hydraulique.

Ces montages sont généralement incomplets car il leur manque un ou plusieurs mouvements pour obtenir un formage satisfaisant. Avec ces montages, il est impossible de décaler les différentes phases de l'opération.

Dans la demande de brevet français publiée sous le n° 2 258 035 déposée au nom de GENERAL ELECTRIC COMPANY, on décrit un appareil pour la mise en forme des têtes de bobine des enroulements d'un stator de moteur électrique. Ce document enseigne que dans un mouvement de descente de presse deux outils réalisent un formage radial des têtes de bobine grâce à des parties formantes. L'appareil selon ce document réalise en séquences plusieurs mouvements de formage latéral ce qui impose une structure complexe à l'appareil.

Afin de porter remède aux inconvénients de l'art antérieur, la présente invention concerne un outil de presse destiné au formage des têtes de bobine disposées de part et d'autre d'un stator de moteur électrique l'outil étant constitué de deux parties formantes montées respectivement sur un nez et une table de presse à mouvement de descente, le mouvement de descente de presse mettant en mouvement radial dans un plan perpendiculaire à l'axe de la descente de presse des éléments de formage radial des parties formantes. Chaque partie formante comporte pour le formage radial plusieurs éléments de matrice solidaires de galets qui roulent sur des cames. L'invention est caractérisée en ce que chaque partie formante comporte un fond de matrice pour effectuer aussi le formage en hauteur de chaque tête de bobine lors de la descente du nez vers la table.

Le description et les figures annexées permettent d'expliquer une application de l'invention par laquelle celle-ci sera mieux comprise. L'application décrite concerne un formage de têtes de bobine cylindrique.

La figure 1 est une vue en coupe de l'outil, le stator étant en place, la presse commençant sa descente.

La figure 2 est une vue de dessus de plateau 3.

Les têtes de bobine 21 appelées plus couramment "Chignons" sont disposées de part et d'autre de paquet de fer 20 du stator. L'opération de formage a pour but de conformer ces têtes de bobine suivant trois dimensions bien définies et se rapportant respectivement:
— au diamètre extérieur B
— au diamètre intérieur C
— à la hauteur H.

Pour obtenir les trois cotes B, C, et H, on a besoin de trois mouvements agissant sur des éléments de matrices. En particulier pour réaliser les cotes B et C, on agit sur plusieurs éléments de matrice extérieurs et intérieurs. Ces éléments sont formés de secteurs convergents.

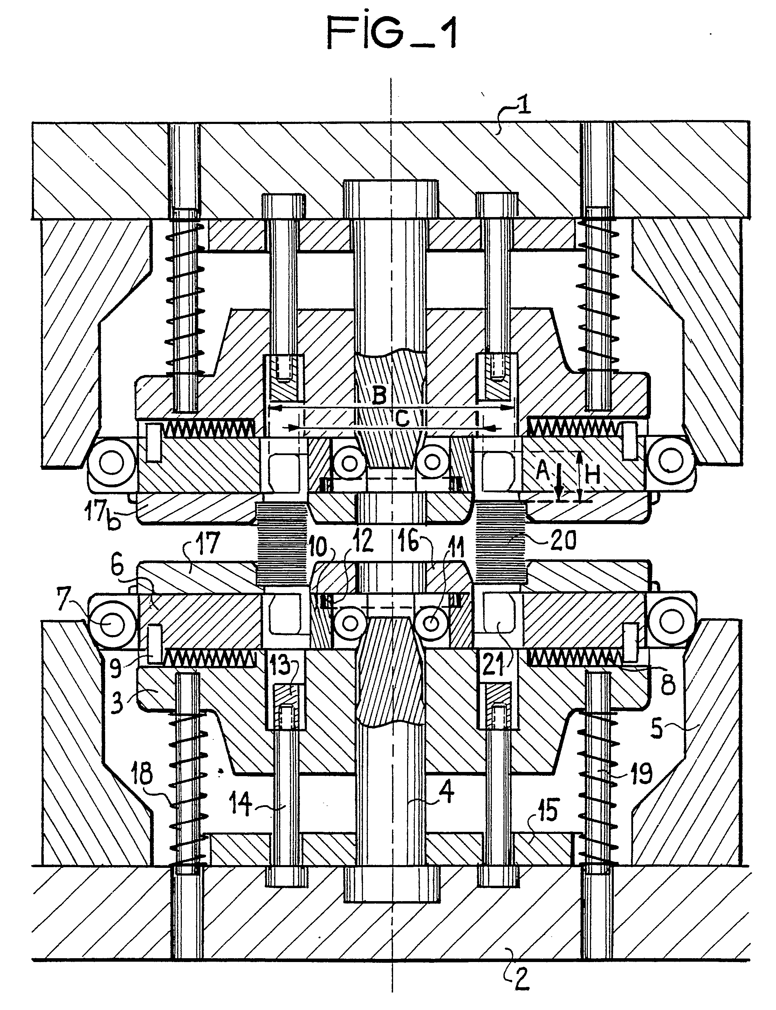

L'outil qui va être décrit à l'aide de la figure 1, permet d'obtenir, en premier lieu les mouvements extérieurs et intérieurs simultanément on non afin de former le chignon aux diamètres B et C et, ensuite de mettre le chignon à la hauteur H. Cette décomposition du formage en au moins deux phases est indispensable pour obtenir une bonne qualité de formage.

L'outil est construit en deux parties: la partie inférieure est fixée sur la table de la presse; la partie supérieure est accouplée au nez de la presse. La partie inférieure se compose d'une semelle 2 qui se fixe sur la table de la presse non représentée. Sur cette semelle 2 reposent la came pyramidale centrale 4 et plusieurs cames périphériques 5 ainsi que des chandelles 14 qui supportent une couronne que l'on appelle "Fond de matrice" 13. La came 4 et les chandelles 14 sont fixées sur la semelle 2 par l'intermédiaire d'une rondelle de calage 15 vissée sur cette même semelle 2. Sur la came 4 qui a un corps cylindrique coulisse un plateau 3. Au repos il est retenu sur le fond de matrice 13 et maintenu dans cette position sous l'action de ressorts 18 guidés par des tiges 19. Le plateau 3 possède plusieurs rainures radiales.

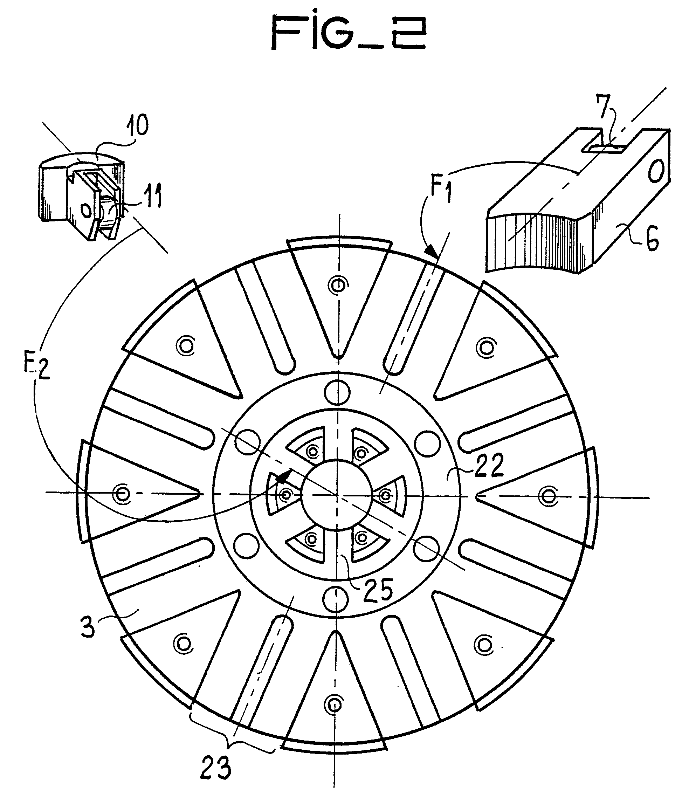

A la figure 2, une gorge 22, de forme circulaire est exécutée sur le plateau 3. Cette gorge 22 contient le fond de matrice 13 de formage en épaisseur. La zone extérieure comporte des rainures 23, chacune recevant un élément de matrice extérieure 6. La flèche $F_1$ indique le positionnement de l'axe de symétrie de l'élément de matrice 6. La zone intérieure comporte des rainures 25 à fond plat, la flèche $F_2$ plaçant l'axe de symétrie de l'un des éléments de matrice intérieure 10 qui s'y insère.

Un couvercle 17 et un chapeau 16 en couronne se fixent par vis sur le plateau 3 et complètent ainsi le guidage des éléments de matrice 6 et 10. L'élément de matrice extérieur 6 de force parallélépipédique possède vers le centre, la partie formante de arc de cercle et à l'arrière, une chape qui reçoit un galet 7. Une butée 9 solidaire de l'élément de matrice 6 reçoit une poussée permanente sous l'action du ressort 8 qui exerce une force suffisante pour garder le contact entre le galet 7 et la came 5.

L'élément de matrice intérieure 10 dont la partie formante est en arc de cercle, possède à l'arrière une chape qui reçoit un galet 11. Le contact permanent entre le galet 11 et une des facettes de la came 4 est assuré par un ressort en caoutchouc en forme de couronne 12. Ca ressort est placé dans une gorge exécutée dans les éléments de matrice intérieures 10.

Dans l'outil décrit ci-dessus, la partie supérieure est identique à la partie inférieure, la semelle 1 ne différant de la semelle 2 que par la présence des éléments de fixation sur le nez de presse.

Pour des raisons de dissymètrie entre les chignons supérieure et inférieur du sator, les parties supérieure et inférieure peuvent être différentes en dimension. Ces différences se situent au niveau des parties formantes des éléments de matrice 6 et 10 et du fond de matrice 13 et correspondent à des différences entre les cotes B, C et H des chignons, Les chignons peuvent également ne pas avoir une forme circulaire ainsi qu'une hauteur H constante. Dans ce cas, il suffit d'adapter le profil des éléments de matrice et du fond de matrice aux chignons.

Le fonctionnement de l'outil est basé sur la décomposition d'un mouvement vertical donné par le vérin de la presse, en plusieurs mouvements radiaux reçus par les éléments de matrice. Les moteurs de ces mouvements résultants sont des galets roulant sur des cames.

Le stator 20 est l'élément de laison entre les parties inférieure et supérieure. Il reçoit le mouvement de la partie supérieure et le transmet à la partie inférieure. De par un èquilibre préalable entre les deux parties, on vérifie qu'elles agissent simultanément. Les parties supérieure et inférieure parcourent leur chemin en même temps.

Pour la mise en oeuvre de l'outil, il a été volontairement choisi de décrire un mécanisme formant 2 chignons identiques. Les diamètres extérieure et intérieure de chignon B et C sont formés simultanément. Il est entendu que pour former successivement l'intérieure et l'extérieure de chignon, il suffit de modifier le profil des cames 4 et 5.

L'opération de formage se déroule de la façon suivante. Au repos, la partie supérieure de l'outil est suffisamment remontée pour permettre l'accès du stator à la partie inférieure. Le stator repose sur le couvercle 17 de la partie inférieure. La partie supérieure descend et vient prendre appui sur la face A du stator, par l'intermédiaire du couvercle 17 bis de la partie supérieure. C'est la première phase du formage. Les galets 7 et 11 roulent sur les pentes des cames 5 et 4 et provoquent le déplacement des éléments de matrice 6 et 10 vers le chignon 21.

La fin de la première phase correspond à l'instant où les galets 7 et 11 passent de la face en pente des cames 5 et 4 à la face verticale. Les diamètres B et C du chignon sont formés et les faces en arc de cercle des éléments de matrice 6 et 10 sont contigües à celles du fond de matrice 13. Le chignon est prisonnier.

Dans la 2ème phase, les éléments de matrice 6 et 10 ne se déplacent plus car leurs galets roulent sur une face verticale et parallèle à la direction du mouvement donné par le vérin de la presse.

Le plateau 3 vient en appui sur la rondelle de calage 15. La hauteur H du chignon est obtenue. La partie supérieure remonte, le mécanisme reprend sa position repos. Les chignons du stator sont formés.

D'autres formes peuvent être données aux têtes de bobine. Des évidements peuvent être aménagés par des éléments de matrice de forme prédéterminée.

**Revendications**

1. Outil de presse destiné au formage des têtes de bobines (21) disposées de part et d'autre d'un stator (20) de moteur électrique, l'outil étant constitué de deux parties formantes montées respectivement sur un nez et une table de presse à mouvement de descente, le mouvement de descente de presse mettant en mouvement radial dans un plan perpendiculaire à l'axe de la descente de presse des éléments de formage radial (6, 10) des parties formantes, chaque partié formante comportant pour le formage radial plusieurs éléments de matrice (6, 10) solidaires de galets (7, 11) roulant sur des cames (4, 5), caractérisé en ce que chaque partie formante comporte un fond de matrice (13) pour effectuer aussi le formage en hauteur de chaque tête de bobine (21) lors de la descente du nez vers la table.

2. Outil selon la revendication 1, caractérisé en ce que la transformation du mouvement de descente de presse en un mouvement radial d'éléments de matrice de formage intérieur (10) est réalisée par le moyen d'une came centrale (4) fixée à la table (2) de presse ou au nez de presse, la came (4) étant prévue pour pénétrer le long de l'axe de descente de presse dans le stator (20), chaque élément de matrice du formage radial intérieur (10) coopérant avec au moins un galet (11) qui roule sur la came centrale (4).

3. Outil selon la revendication 1 ou 2, caractérisé en ce que la transformation du mouvement de descente de presse en un mouvement radial des éléments de matrice de formage extérieur (6) est réalisé par le moyen de cames latérales (5) fixées à la table (2) ou au nez de presse tout autour de l'axe de descente de presse, chaque élément de matrice de formage extérieure (6) coopérant avec au moins un galet (7) roulant sur une came latérale (5) qui lui correspond.

4. Outil selon l'une des revendications 2 ou 3, caractérisé en ce que le formage de l'intérieur des têtes de bobines (21) est réalisé par des éléments de matrice (10) dont les faces en regard de la tête de bobine (21) ont des profils de dimensions prédéterminées, la face opposée de chaque élément de matrice (10) portant une chape gardant un galet (11) en contact avec une came centrale (4), le contact étant assuré par un ressort en forme de couronne (12) logé dans une gorge exécutée dans les éléments de matrice (10), et en ce que le formage en diamètre extérieur est réalisé simultanément par des éléments de matrice (6) parallélépipédiques dont les faces en regard de la tête solidaire ont des profils de dimensions prédéterminées, la face opposée de chaque élément de matrice portant une chape gardant un galet (7) en contact avec la came latérale correspondante (5), le contact étant assuré par un ressort (8) logé dans une rainure d'un plateau (3) et prenant appui d'une part sur le plateau (3) et d'autre part sur une butée (9) solidaire de l'élément de matrice (6).

5. Outil selon la revendication 4, caractérisé en ce que le fond de matrice (13) dont la face en regard de la tête de bobine a une profil de dimension prédéterminée, est placé dans une gorge circulaire (22) du plateau (3) fixé par des chandelles (14) à une semelle (1 ou 2).

6. Outil selon la revendication 4, caractérisé en ce que les éléments de matrice formante sont guidés latéralement dans des rainures radiales du plateau (3) qui les soutient, ce plateau étant mobile verticalement sur une semelle (1 ou 2) sur des tiges (19) portant ressort (18) dans chaque partie de l'outil et recouvert par un couvercle (17) et un chapeau (16) fixé sur le plateau (3).

7. Outil selon la revendication 4, caractérisé en ce que la came centrale (4) est fixée dans la semelle (1 ou 2) et comporte un corps cylindrique le long duquel glisse le plateau (3) et une tête en tronc de pyramide et en ce que le jeu de cames latérales (5) fixé à la semelle (1 ou 2) comporte dans le haut des plans d'inclinaison et de dimensions prédéterminées pour réaliser en combinaison avec le profil de la came centrale (4) le formage en deux phases simultanées ou non des têtes de bobines.

**Patentansprüche**

1. Presswerkzeug zum Formen von beiderseits des Stators (20) eines Elektromotors angeordneten Spulenköpfen (21), bei dem das Werkzeug aus zwei an einer Nase bzw. einem bewegbaren Tisch einer abwärts bewegbaren Presse angebrachten Formteilen besteht, wobei die Abwärtsbewegung der Presse in einer zur Abwärtsbewegungsachase der Presse senkrechten Ebene Formelemente (6, 10) der Formteile radial bewegt und jedes Formteil zum radialen Formen eine Mehrzahl von Matrizenelementen (6, 10) aufweist, die mit auf Nocken (4, 5) rollenden Rollen (7, 11) fest verbunden sind, dadurch gekennzeichnet, dass jedes Formteil einen Matrizenboden (13) aufweist, um ebenfalls das Formen in Richtung der Höhe eines jeden Spulenkopfes (21) während der Abwärtsbewegung der Nase auf den Tisch auszuführen.

2. Werkzeug nach Anspruch 1, dadurch gekennzeichnet, dass die Umwandlung der Abwärtsbewegung der Presse in eine radiale Bewegung von Innenformungs-Matrizenelementen (10) vermittels eines am Tisch (2) oder der Nase der Presse angeordneten Zentralnockens (4) bewirkt wird, welcher derart ausgestaltet ist, dass er längs der Abwärtsbewegungsachse der Presse in der Stator (20) eindringt, wobei jedes Radial-Innenform-Matrizenelement (10) mit wenigstens einer auf dem Zentralnocken (4) rollenden Rolle (11) zusammenwirkt.

3. Werkzeug nach Anspruch 1 oder 2, dadurch gekennzeichnet, dass die Umwandlung der Abwärtsbewegung der Presse in eine Radialbewegung der Aussenformungs-Matrizenelemente (6) durch am Tisch (2) oder an der Nase der Presse rings um die Abwärtsbewegungsachse derselben angeordnete seitliche Nocken (5) bewirkt wird, wobei jedes Aussenformungs-Matrizenelement (6) mit wenigstens einer auf einem ihr entsprechenden seitlichen Nocken (5) rollenden Rolle (7) zusammenwirkt.

4. Werkzeug nach einem der Ansprüche 2 oder 3, dadurch gekennzeichnet, dass das innere Formen der Spulenköpfe (21) durch Martrizenelemente (10) erfolgt, deren dem Spulenkopf (21) gegenüberliegende Flächen Profile vorbestimmter Abmessungen besitzen, wobei die entgegengesetzte Fläche jedes Matrizenelements (10) eine Gabel trägt, die eine Rolle (11) mit einem Zentralnocken (4) in Berührung hält, und wobei die Berührung durch eine in einer Auskehlung der Matrizenelemente (10) angeordnete, kranzförmige Feder (12) sichergestellt ist, und dass das Formen im Sinn des Aussendurchmessers gleichzeitig durch parallelepipedische Matrizenelemente (6) erfolgt, deren dem festverbundenen Kopf gegenüberliegende Flächen Profile mit vorbestimmten Abmessungen besitzen, während die entgegengesetzte Fläche jedes Matrizenelementes eine Gabel trägt, die eine Rolle (7) in Berührung mit dem entsprechenden seitlichen Nocken (5) hält, wobei dei Berührung durch eine in einer Ausnehmung einer Platte (3) angeordnete Feder (8) sichergestellt wird, die sich einerseits an der Platte (3) und andererseits an einem mit dem Matrizenelement (6) fest verbundenen Anschlag (9) abstützt.

5. Werkzeug nach Anspruch 4, dadurch gekennzeichnet, dass der Matrizenboden (13), dessen dem Spulenkopf gegenüberliegende Fläche eine Profil mit vorbestimmten Abmessungen besitzt, in einer ringförmigen Ausnehmung (22) der durch Pfosten (14) an einer Sohle (1 oder 2) befestigten Platte (3) angeordnet ist.

6. Werkzeug nach Anspruch 4, dadurch gekennzeichnet, dass die Formmatrizenelemente seitlich in Radialnuten der diese Elemente haltenden Platte (3) geführt sind, wobei diese Platte auf einer Sohle (1 oder 2) und an mit Federn (18) versehenen Stangen (19) in jedem Werkzeugteil senkrecht beweglich und von einem Deckel (17) und einer an der Platte (3) befestigten Haube abgedeckt ist.

7. Werkzeug nach Anspruch 4, dadurch gekennzeichnet, dass der Zentralnocken (4) in der Sohle (1 oder 2) befestigt ist und einen zylindrischen Körper aufweist, auf welchem die Platte (3) gleitet, sowie einen pyramidenstumpfförmigen Kopf, und dass die Gruppe von an der Sohle (1 oder 2) befestigten seitlichen Nocken (5) am Oberteil Ebenen mit vorbestimmtem Neigungswinkel und vorbestimmten Abmessungen besitzen, um mit dem Profil des Zentralnockens (4) zusammenwirkend das Formen der Spulenföpfe in zwei gleichzeitigen oder nicht gleichzeitigen Bearbeitungsschritten zu bewirken.

## Claims

1. A press tool for forming coil heads (21) placed on either side of the stator (20) of an electric motor, said tool being constituted by two forming portions mounted respectively on a nose and the table of a press adapted to effect a descending motion causing radial forming elements (6, 10) of said forming portions to move radially in a plane perpendicular to the axis of descent of said press, each forming portion comprising, for the radial forming, a plurality of die elements (6, 10) integral with rollers (7, 11) rolling on cams (4, 5) characterized in that each forming portion comprises a die bottom (13) adapted to effect also the forming in height of each coil head (21) during the descent of said nose toward said table.

2. A tool according to claim 1, characterized in that the conversion of the descending press motion into a radial motion of internal forming die elements (10) is effected by means of a central cam (4) affixed to the table (2) or the nose of said press, said cam (4) being adapted to penetrate the stator (20) along the axis of descent of the press, each internal radial forming die element (10) cooperating with at least one roller (11) rolling on said central cam (4).

3. A tool according to claim 1 or 2, characterized in that the conversion of the descending press motion into a radial motion of the external forming die elements (6) is effected by means of lateral cams (5) affixed to the table (2) or the nose of said press, entirely surrounding the axis of descent of the press, each external forming die element (6) cooperating with at least one roller (7) rolling on a lateral cam (5) corresponding thereto.

4. A tool according to any one claims 2 or 3, characterized in that the internal forming of the coil heads (21) is effected by die elements (10) the faces of which, that are opposed to the coil head (21), have profiles with predetermined dimensions, the opposite face of each die element (10) being provided with a fork member bearing a roller (11) in engagement with a central cam (4), such engagement being ensured by a circular spring (12) mounted in a groove provided in the die elements (10), and in that the external diametrical forming is effected simultaneously by parallelepipedic die elements (6) the faces of which, that are opposed to the integral head, have profiles of predetermined dimensions, the opposite face of each die element being provided with a fork member bearing a roller (7) which engages a corresponding lateral cam (5), this engagement being ensured by a spring (8) mounted in a groove of a plate (3) and bearing, on the one hand, on said plate (3) and, on the other hand, on a stop member (9) integral with the die element (6).

5. A tool according to claim 4, characterized in that die bottom (13), the face of which is opposed to the coil head, has a profile of predetermined dimensions, is disposed in a circular groove (22) of the plate (3) which is fixed by studs (14) to a base (1 or 2).

6. A tool according to claim 4, characterized in that the forming die elements are guided laterally in radial grooves of the plate (3) which supports said elements, said plate being movable vertically on a base (1 or 2) along rods (19) provided with springs (18) in each part of the tool, and covered by a cover (17) and a cap (16) fixed to the plate (3).

7. A tool according to claim 4, characterized in that the central cam (4) is fixed in the base (1 to 2) and comprises a cylindrical body along which slides the plate (3), as well as a head in the form of a truncated pyramid, and in that the group of lateral cams (5) fixed to the base (1 or 2) comprises, at the upper portion, planes with predetermined inclination and dimensions, so as to effect, in combination with the profile of said central cam (4), the forming of said coil heads, in two simultaneous or non simultaneous steps.

FIG_1

0 031 739

0 031 739

FIG_2